# EUROPÄISCHE PATENTSCHRIFT

(11) **EP 1 924 834 B1**
(45) Veröffentlichungstag und Bekanntmachung des Hinweises auf die Patenterteilung: **16.06.2010**
(21) Anmeldenummer: 06791844.1
(22) Anmeldetag: 05.09.2006
(51) Int. Cl.: G01M 13/04

(54) **SENSORANORDNUNG**
SENSOR ARRANGEMENT
SYSTEME CAPTEUR

(30) Priorität: 08.09.2005 DE 102005042776
(43) Veröffentlichungstag der Anmeldung: 28.05.2008
(73) Patentinhaber: Dittel Messtechnik GmbH, 86899 Landsberg am Lech (DE)
(72) Erfinder: BICHLER, Harald, 86938 Schondorf (DE)
(74) Vertreter: Manitz, Finsterwald & Partner GbR
(86) Internationale Anmeldenummer: PCT/EP2006/008648
(87) Internationale Veröffentlichungsnummer: WO 2007/028575

(56) Entgegenhaltungen:
- EP-A2- 1 203 960
- DE-A1- 19 940 869
- US-A1- 2003 030 565

## Beschreibung

Die Erfindung betrifft eine Sensoranordnung zur Lagerzustandsüberwachung an Spindeln.

Insbesondere an Werkzeugmaschinen eingesetzte Spindeln und besonders deren Lager sind im Betrieb hohen Belastungen ausgesetzt. Dies gilt vor allem für schnell drehende Hochpräzisionsspindeln, die mit Drehzahlen von 25.000 U/min und mehr betrieben werden. Bei den Spindellagern handelt es sich typischerweise um Kugellager, die einen fest mit der rotierenden Spindelwelle verbundenen Lagerinnenring und einen stationären Lageraußenring umfassen. Es gibt zunehmend die Bestrebung, den Zustand dieser Spindellager möglichst genau zu überwachen, um frühzeitig Beschädigungen der Lager oder ein nicht bestimmungsgemäßes Laufverhalten der Spindelwelle erkennen zu können.

In diesem Zusammenhang ist es zum Zwecke der Messung der Lagertemperatur am hierbei besonders interessierenden Lagerinnenring bereits bekannt, einen Temperatursensor unterhalb, d.h. radial innerhalb des Lagerinnenrings zu positionieren. Hierfür ist allerdings eine grundsätzlich mit Nachteilen verbundene Bearbeitung der Spindelwelle erforderlich, um sowohl den Sensor selbst als auch die Leitungen an der Welle unterzubringen, die erforderlich sind, um den Sensor mit einem so genannten Telemetriering zu verbinden, der sich an einem anderen axialen Ort auf der Spindelwelle befindet und dazu dient, berührungslos Energie und Signale zwischen dem mitrotierenden Sensor und stationären Einrichtungen des Übertragungssystems zu übertragen.

Da die Verbindung zwischen Temperatursensor und Telemetriering einerseits beispielsweise zu Wartungszwecken lösbar ausgestaltet sein, andererseits aber gleichzeitig den während des Betriebs auftretenden Zentrifugalkräften standhalten muss, ist die Verbindung konstruktiv extrem aufwändig. Ein weiterer Nachteil besteht darin, dass für jeden Spindeltyp die gesamte Sensorik und Übertragungselektronik (Telemetrie) neu entwickelt werden muss.

Die Überwachung von Spindellagern ist nicht auf Temperaturmessungen beschränkt. Es ist auch bekannt, im Bereich der Lager auftretende Schwingungen zu messen. Hierzu wird auf dem Lageraußenring ein Beschleunigungsaufnehmer montiert. Diese Vorgehensweise hat den Nachteil, dass bereits im normalen Betrieb Störfrequenzen vorhanden sind, die beispielsweise von der Motorsteuerung herrühren. Hierdurch können Schwingungen entstehen, die eine für die Praxis geeignete Schwingungsüberwachung der Spindellager beeinträchtigen oder unmöglich machen können. Außerdem hat sich herausgestellt, dass die eigentlich interessierenden Störfrequenzen gerade bei schnell laufenden Spindeln von Werkzeugmaschinen auf diese Weise nicht bestimmt werden können.

Des Weiteren ist es bekannt, die Spindellager dadurch zu überwachen, dass der radiale Abstand zwischen dem Lagerinnenring und dem Lageraußenring während des Betriebs überwacht wird, um daraus Rückschlüsse über den Zustand des betreffenden Lagers ziehen zu können. Hierbei handelt es sich um eine technisch sehr aufwändige und damit entsprechend kostenintensive Methode, die für in relativ großen Stückzahlen herzustellende Spindeln, bei denen der Preis eine wichtige Rolle spielt, ungeeignet ist.

Schließlich offenbart US 2003/0030565 A1 einen drahtlosen Sensor zur Anordnung in einem Lager. Gemäß einem Ausführungsbeispiel ist eine Lagereinheit vorgesehen, die mit einer zum drahtlosen Senden ausgebildeten Sensoreinheit versehen ist. Die Sensoreinheit umfasst eine aus Vibrationssensor und Temperatursensor bestehende Detektionseinheit sowie eine Verarbeitungseinheit, eine Kommunikationsarbeit und Batterien. Die Sensoreinheit ist über einen äußeren Distanzring am äußeren Lagerring des Lagers befestigt.

EP 1 203 960 A2 zeigt verschiedene Ausführungsbeispiele eines Lagers mit einem äußeren Lagerring und einem inneren Lagerring. Sensoren können am äußeren Lagerring, am inneren Lagerring oder an beiden Lagerringen vorgesehen sein, welche Daten an eine außerhalb angeordnete Antenne bzw. einen an einer Außenfläche eines Gehäuses vorgesehenen Ultraschallempfänger übertragen.

Aufgabe der Erfindung ist es, eine vor allem im Hinblick auf störende Einflüsse zuverlässige und unanfällige Möglichkeit zur Lagerzustandsüberwachung zu schaffen, die auf möglichst einfache und kostengünstige Weise realisiert werden kann, wobei dies insbesondere ohne ein Bearbeitung der Spindelwelle möglich sein soll.

Die Lösung dieser Aufgabe erfolgt durch die Merkmale des Anspruchs 1.

Erfindungsgemäß umfasst die Sensoranordnung zwei konzentrisch angeordnete Sensorringe, wobei im Betrieb der innere Sensorring zusammen mit der Spindelwelle relativ zu dem ihn umgebenden äußeren Sensorring rotiert, und wobei in jeden Sensorring wenigstens ein Sensor für einen zu überwachenden Lagerparameter sowie eine Übertragungseinrichtung, insbesondere Spule, eines Übertragungssystems integriert sind, das zur berührungslosen Energie- und Signalübertragung zwischen den beiden Sensorringen dient.

Die Erfindung stellt eine kompakte, hochintegrierte Sensoranordnung bereit, die für die Überwachung typischer Spindellager, die aus einem inneren Lagerring und einem äußeren Lagerring bestehen, optimal geeignet ist, da mit dem inneren Sensorring der innere Lagerring und mit dem äußeren Sensorring der äußere Lagerring überwacht werden kann. Auf diese Weise wird mit der erfindungsgemäßen Sensoranordnung der Aufbau der zu überwachenden Spindellager gewissermaßen nachgebildet.

Ein wesentlicher Vorteil der Erfindung besteht darin, dass direkt auch der innere Lagerring überwacht werden kann, und zwar ohne das Erfordernis einer Bearbeitung der Spindelwelle. Des Weiteren erübrigt sich ein Verlegen von Leitungen zwischen Sensor und Übertragungseinheit in oder auf der Spindelwelle, da erfindungsgemäß bereits für eine derartige Übertragung dienende Einrichtungen, insbesondere Spulen, in die Sensorringe integriert sind.

Die Erfindung betrifft außerdem eine Spindel mit wenigstens einer erfindungsgemäßen Sensoranordnung.

Ferner betrifft die Erfindung ein Verfahren zur Lagerzustandsüberwachung an Spindeln, bei dem mit wenigstens einer erfindungsgemäßen Sensoranordnung zumindest ein Spindellager überwacht wird, indem mit dem inneren Sensorring ein zusammen mit der Spindelwelle rotierendes Lagerinnenteil und mit dem äußeren Sensorring ein stationäres Lageraußenteil des Spindellagers überwacht wird.

Bevorzugte Ausführungsformen der Erfindung sind auch in den abhängigen Ansprüchen, der Beschreibung sowie der Zeichnung angegeben.

Bei den in die Sensorringe integrierten Sensoren kann es sich beispielsweise jeweils um einen Temperatursensor handeln, mit dem die Temperatur eines in Betrieb in unmittelbarer Nähe befindlichen Lagerbestandteils gemessen werden kann. Vorzugsweise stehen die Temperatursensoren jeweils in thermischem und/oder mechanischem Kontakt mit einer eine axiale Außenfläche aufweisenden Seitenwand des Sensorrings.

Alternativ oder zusätzlich kann in jeden Sensorring ein Schwingungssensor integriert sein. Da es die Erfindung ermöglicht, den inneren Sensorring zur Überwachung des Lagerinnenringes und den äußeren Sensorring zur Überwachung des Lageraußenringes vorzusehen, d.h. gleichzeitig Messungen am inneren Lagerteil und am äußeren Lagerteil durchzuführen, kann mit der erfindungsgemäßen Sensoranordnung insbesondere eine akustische Übertragungsfunktion des betreffenden Spindellagers bestimmt werden. Auf diese Weise kann - unbeeinflusst durch andere Schwingungs- bzw. Störungsquellen - das Verhalten des Spindellagers in akustischer Hinsicht ermittelt und bei Veränderungen dieses Verhaltens z.B. auf eine Beschädigung des Lagers oder allgemein eine Störung des Laufverhaltens der Spindelwelle geschlossen werden.

Die Erfindung ist nicht auf Temperatur- und Schwingungssensoren beschränkt. Grundsätzlich können auch andere Sensoren zum Einsatz kommen. Ferner ist es nicht zwingend erforderlich, wenn auch bevorzugt, im inneren Sensorring und im Sensorring gleichartige Sensoren vorzusehen, d.h. die beiden Sensorringe gleichzeitig hinsichtlich des gleichen Parameters zu überwachen.

Gemäß einem weiteren Ausführungsbeispiel der Erfindung ist ein Sensorring, vorzugsweise der äußere Sensorring, mit einer ansteuerbaren Schwingungsquelle versehen. Hierdurch kann das zu überwachende Spindellager gezielt in Schwingungen versetzt werden, um dann anhand der Messung der akustischen Reaktion des Lagers auf diese Anregung Rückschlüsse auf den Lagerzustand ziehen zu können.

Vorzugsweise sind die Sensoren in den Sensorringen jeweils bezüglich der Axialrichtung außermittig angeordnet. Diese Asymmetrie ermöglicht es, die Sensoren so nahe wie möglich am zu überwachenden Spindellager zu positionieren, wenn die erfindungsgemäße Sensoranordnung axial neben dem Spindellager auf der Spindelwelle montiert wird.

Ein besonders einfacher Aufbau der erfindungsgemäßen Sensoranordnung ergibt sich dann, wenn gemäß einem weiteren Ausführungsbeispiel der Erfindung in jedem Sensorring der Sensor und die erforderliche Elektronik zum Betreiben des Sensors und/oder zumindest eines Teils des Übertragungssystems auf einer in den Sensorring integrierten Platine zusammengefasst sind.

Bei der erfindungsgemäßen Spindel ist bevorzugt vorgesehen, dass die Sensoranordnung und das jeweils zu überwachende Spindellager nebeneinander auf der Spindelwelle angeordnet und dabei insbesondere unmittelbar einander benachbart sind.

Wie vorstehend bereits erwähnt, ist vorzugsweise vorgesehen, dass der innere Sensorring einem zusammen mit der Spindelwelle rotierenden Lagerinnenteil und der äußere Sensorring einem stationären Lageraußenteil des jeweils zu überwachenden Spindellagers zugeordnet ist.

Um die Sensoranordnung zwischen zwei axial beabstandeten Spindellagern zu positionieren, ist es besonders vorteilhaft, wenn gemäß einer weiteren Ausführungsform der Erfindung die Sensoranordnung und das jeweils zu überwachende Spindellager den gleichen Außendurchmesser aufweisen.

Des Weiteren ist es bevorzugt, dass die Sensorringe jeweils den gleichen Innendurchmesser und/oder Außendurchmesser wie ein jeweils zu überwachender ringförmiger Bestandteil des Spindellagers aufweisen.

Wenn die erfindungsgemäße Sensoranordnung zwischen zwei beabstandeten Spindellagern positioniert ist, dann ist vorzugsweise vorgesehen, dass die Sensoranordnung zwischen den beiden Spindellagern eingespannt ist.

Bevorzugt ist es, wenn die Sensoranordnung zwischen dem jeweils zu überwachenden Spindellager und einem axialen Anschlag für das Spindellager positioniert und insbesondere eingespannt ist.

In der Praxis handelt es sich bei den Spindellagern häufig um so genannte vorgespannte Lager, bei denen der innere Lagerring und der äußere Lagerring in axialer Richtung aufeinander zu vorgespannt sind. Schnelllaufende Hochpräzisionsspindeln verfügen in der Praxis fast immer über derartige Spindellager. Bei einer zwischen zwei derartigen Spindellagern positionierten Sensoranordnung ist erfindungsgemäß vorzugsweise vorgesehen, dass die Sensoranordnung zwischen den Spindellagern wirkende Vorspannkräfte überträgt.

Die Erfindung ist nicht auf das Vorsehen einer einzigen Sensoranordnung an einer Spindel beschränkt. Vielmehr ist es bevorzugt, dass bei einer mehrere Spindellager umfassenden Spindel jedem dieser Spindellager eine erfindungsgemäße Sensoranordnung zugeordnet ist.

Wie vorstehend bereits erwähnt, kann die erfindungsgemäße Sensoranordnung dazu verwendet werden, spezielle Übertragungsfunktionen des jeweiligen Spindellagers zu bestimmen. Hierbei können nicht nur akustische Übertragungsfunktionen ermittelt werden, sondern es ist mit in die Sensorringe integrierten Temperatursensoren möglich, auch eine thermische Übertragungsfunktion eines Spindellagers zu bestimmen. Dies gilt analog für weitere Lagerparameter, die mit entsprechenden Sensoren in erfindungsgemäßer Weise überwacht werden. Allgemein ermöglicht es die Erfindung, mathematische Beziehungen zwischen den Sensorsignalen der in die beiden Sensorringe integrierten Sensoren zu bestimmen und diese Beziehungen der weiteren Auswertung zuzuführen. Eine störungsbehaftete Einzelauswertung der Sensorsignale wird hierdurch in vorteilhafter Weise vermieden. Hierfür werden insbesondere baugleiche bzw. identische Sensoren verwendet.

Die Erfindung wird im Folgenden beispielhaft unter Bezugnahme auf die Zeichnung beschrieben. Es zeigen:
- Fig. 1a: verschiedene Ansichten einer aus zwei konzentrischen Ringen bestehenden Sensoranordnung gemäß einer Aus- führungsform der Erfindung,
- Fig. 1b: verschiedene Ansichten einer aus zwei konzentrischen Ringen bestehenden Sensoranordnung gemäß einer weite- ren Ausführungsform der Erfindung,
- Fig. 2: ein Beispiel für den Einbau einer erfindungsgemäßen Sen- soranordnung in eine Spindel, und
- Fig. 3: verschiedene Möglichkeiten für die Positionierung einer oder mehrerer erfindungsgemäßer Sensoranordnungen auf einer Spindelwelle.

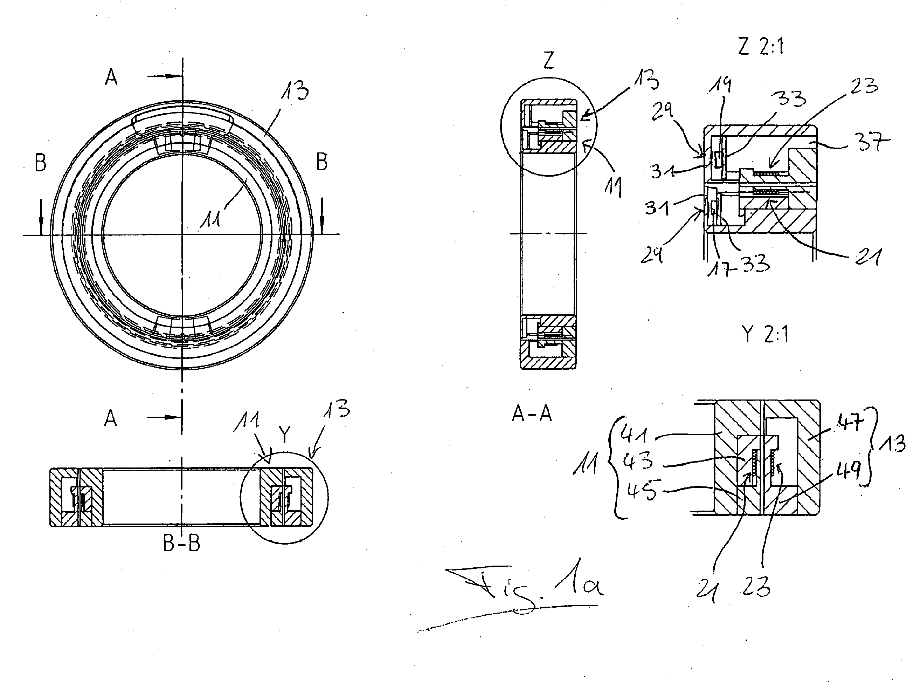

In Fig. 1a ist eine erfindungsgemäße Sensoranordnung dargestellt, die zwei im Betriebszustand konzentrisch angeordnete Sensorringe 11, 13 umfasst, welche die gleiche axiale Länge aufweisen.

Jeder Sensorring 11, 13 weist mehrere Bestandteile auf. Der innere oder rotierende Sensorring 11 umfasst ein abgewinkeltes, im Querschnitt L-förmiges Ringelement 41 (Trägerring) aus Metall, das mit zwei ebenfalls im Querschnitt L-förmigen Kunststoff-Ringelementen 43, 45 durch Verkleben verbunden ist, die sich im Querschnitt zu einem nahezu vollständig ausgefüllten Rechteck ergänzen. In einem verbleibenden Ringspalt zwischen den beiden Kunststoff-Ringelementen 43, 45 ist die innere Spule 21 eines Übertragungssystems zur berührungslosen Übertragung von Energie und Signalen angeordnet. Die Spule 21 ist auf den Ring 43 geklebt.

Der äußere oder stationäre Sensorring 13, der während des Betriebs nicht rotiert, umfasst ebenfalls ein im Querschnitt L-förmiges Metall-Ringelement 47 (Trägerring), das lediglich mit einem einzigen Kunststoff-Ringelement 49 (Deckel) durch Verkleben verbunden ist, welches eine umlaufende Vertiefung auf seiner radial äußeren Seite aufweist, in der eine äußere Spule 23 des Übertragungssystems angeordnet ist.

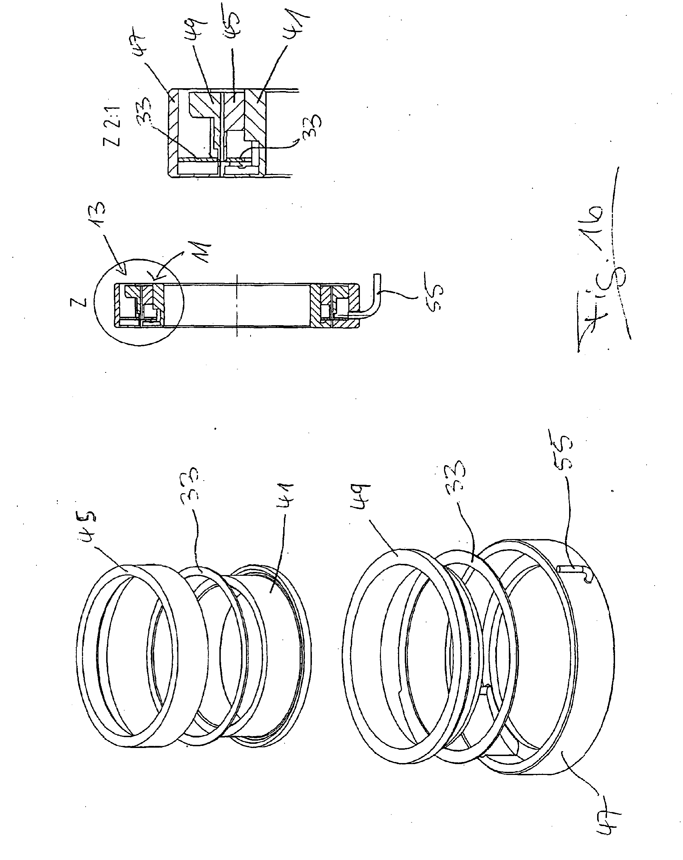

In dem Ausschnitt "Z" in Fig. 1 sind in den beiden Sensorringen 11, 13 die kreisbogenförmig ausgebildeten und sich damit lediglich über einen relativ kleinen Winkelbereich erstreckenden Platinen 33 dargestellt, die mit einem oder mehreren Sensoren 17, 19 zur Überwachung des jeweiligen Spindellagers sowie mit der gesamten benötigten Elektronik bestückt sind, welche insbesondere zur Aufbereitung und Weiterleitung der Sensorsignale dient.

Die Platine 33 des inneren Sensorrings 11 ist hierzu an die innere Spule 21 angeschlossen. Die Platine 33 des äußeren Sensorrings 13 ist mit der äußeren Spule 23 und außerdem mit einer oder mehreren nicht dargestellten Signalleitungen verbunden, über welche von den Sensoren 17, 19 beider Ringe 11, 13 gelieferte Daten gleichzeitig einer nachgeordneten Speicher- und/oder Auswerteeinrichtung, insbesondere einem in die Spindel integrierten so genannten Datenlogger, oder einem Steckanschluss der Spindel zugeführt werden können. Hierzu weist der äußere Sensorring 13 eine Öffnung 37 auf, über welche die Signalleitungen nach außen geführt werden können.

In dem Ausführungsbeispiel der Fig. 1b ist in jeden Sensorring 11, 13 jeweils nur eine einzige ringförmige Platine 33 integriert. Eine Besonderheit besteht darin, dass die Platinen 33 nicht nur die Sensoren und die benötigten elektronischen Komponenten tragen, sondern gleichzeitig jeweils auch als Spule dienen bzw. als Spule ausgebildet sind. Hierzu sind die Platinen 33 jeweils mit konzentrischen Leiterbahnen bedruckt, die als Spulen wirken, mit denen die erforderlichen Übertragungsfunktionen erfüllt werden können.

Entsprechend dem Ausführungsbeispiel der Fig. 1a sind sowohl beim äuβeren Statorring 13 als auch beim inneren Statorring 11 jeweils der die axiale Messfläche bildende Trägerring 47 bzw. 41 und der Deckel 49 bzw. 41 miteinander verklebt. Eine ggf. erforderliche Übertragung der Lagervorspannung erfolgt über die Trägerring 47, 41.

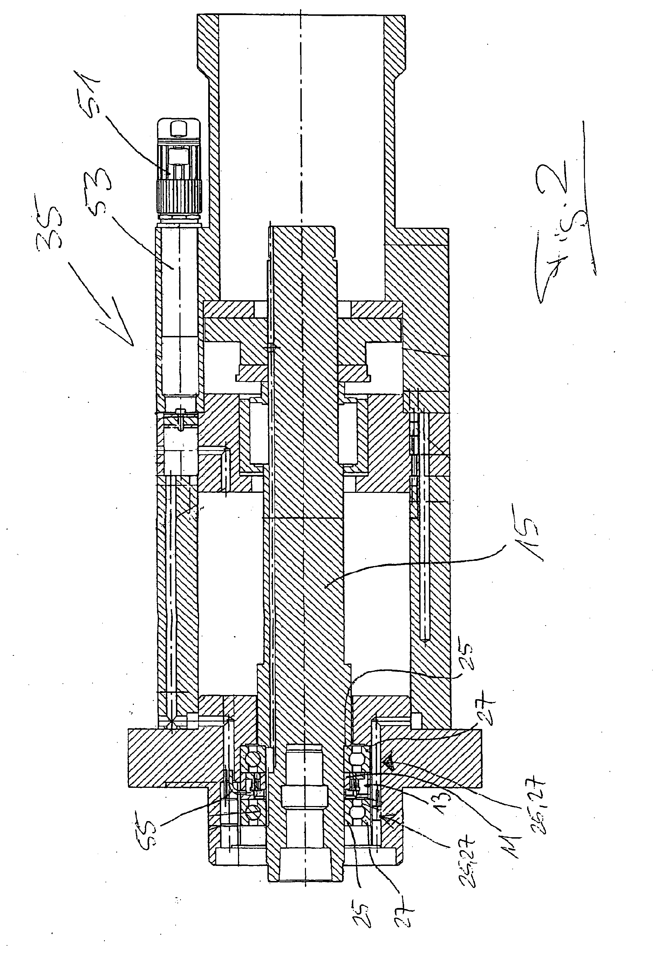

Fig. 2 zeigt ein Beispiel für die Positionierung der in Fig. 1 dargestellten Sensoranordnung zwischen zwei Lagern 25, 27 einer Spindel 35. Die im Betrieb rotierende Spindelwelle 15, die an ihrem vorderen, in Fig. 2 linken Ende mit nicht dargestellten Bearbeitungswerkzeugen versehen werden kann, ist im vorderen Bereich mittels zweier axial beabstandeter Lager 25, 27 an dem stationären Teil der Spindel 35 gelagert. Die Spindellager wiesen jeweils einen inneren Lagerring 25 sowie einen äußeren Lagerring 27 auf. Der innere Lagerring 25 ist drehfest mit der Spindelwelle 15 verbunden, wohingegen der äußere Lagerring 27 ein Bestandteil des stationären Spindelabschnitts ist.

Die erfindungsgemäße Sensoranordnung - bestehend aus innerem Sensorring 11 und äußerem Sensorring 13 - ist zwischen den beiden Spindellagern 25, 27 eingespannt und dabei so orientiert, dass die auf den Platinen 33 angebrachten Sensoren 17, 19 (vgl. Ausschnitt Z in Fig. 1) auf derjenigen Seite der Sensoranordnung liegen, die dem in Fig. 2 linken Spindellager 25, 27 zugewandt ist. Bei dieser Einbauvariante wird mittels der erfindungsgemäßen Sensoranordnung somit lediglich das in Fig. 2 linke Spindellager 25, 27 überwacht, wobei der innere Sensorring 11 dem inneren Lagerring 25 und der äußere Sensorring 13 dem äußeren Lagerring 27 zugeordnet ist. Die radialen Positionen der Sensoren 17, 19 entsprechen dabei denjenigen des jeweils von ihnen zu überwachenden Lagerbestandteils 25, 27, so dass insofern die erfindungsgemäße Sensoranordnung dem Aufbau des zu überwachenden Spindellagers nachempfunden ist.

Teilweise dargestellt ist in Fig. 2 eine Signalleitung 55, über welche die von den Sensoren ermittelten Messwerte an einen in den stationären Teil der Spindel 35 integrierten Datenlogger 53 übermittelt werden, der die Daten während des Spindelbetriebs nach Art eines elektronischen "Fahrtenschreibers" bzw. "Logbuches" speichert. Über einen Stecker 51 kann der Datenlogger 53 an eine externe Auswerteeinheit angeschlossen und ausgelesen werden, um die während des Betriebs der Spindel 35 gesammelten Daten auszuwerten. Alternativ kann auf einen spindelintegrierten Datenlogger 53 verzichtet und die Spindel 35 einfach mit einem herkömmlichen Anschluss, z.B. in Form eines Steckkontaktes, für die Signalleitung 55 versehen sein, an den eine externe Auswerteeinheit angeschlossen ist.

Vorzugsweise ist die in die Sensorringe 11, 13 Elektronik der erfindungsgemäßen Sensoranordnung derart ausgelegt, dass die Messwerte der Sensoren digitalisiert und in digitaler Form an den Datenlogger 53 bzw. einen Anschluss übertragen werden. Hierdurch ist ein besonders störunanfälliger Messbetrieb gewährleistet.

Auf weitere Einzelheiten der in Fig. 2 dargestellten Spindel 35 soll an dieser Stelle nicht näher eingegangen werden, da diese nur zur Veranschaulichung einer Einbaumöglichkeit für die erfindungsgemäße Sensoranordnung dient.

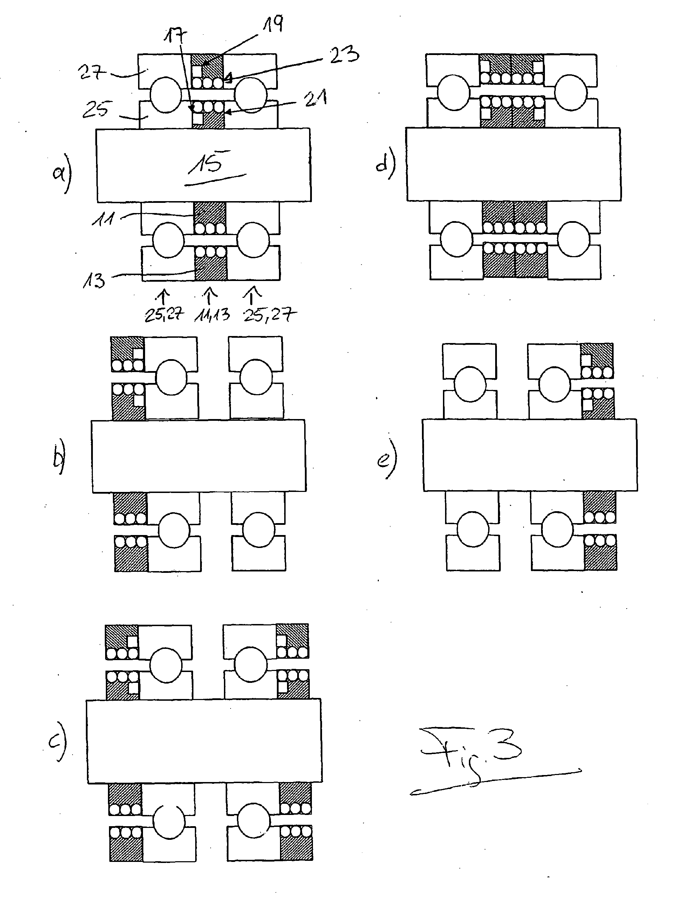

Die Einbauvariante gemäß Fig. 3a entspricht der in Fig. 2 gezeigten Situation und wird insbesondere dann gewählt, wenn lediglich ein Spindellager überwacht werden soll und der Raum zwischen den beiden axial beabstandeten Spindellagern nicht anderweitig benötigt wird, beispielsweise für die Zufuhr von Schmiermittel.

Die Einbauvarianten 3b und 3e zeigen, dass es auch möglich ist, die erfindungsgemäße Sensoranordnung "außerhalb" des Spindellagerpaares zu positionieren. Der Vergleich von Fig. 3a und 3b zeigt, dass die Orientierung der axial außermittig angeordneten Sensoren 17, 19 einfach durch Verdrehen des "Doppelringsensors" um 180° entsprechend angepasst werden kann.

Bei den Außen-Varianten gemäß Fig. 3b und 3e kann die Sensoranordnung 11, 13 zwischen dem jeweils zu überwachenden Lager 25, 27 und einem diesem Lager 25, 27 zugeordneten, nicht dargestellten axialen Anschlag positioniert werden. Die äußere Positionierung der Sensoranordnung 11, 13 kommt beispielsweise dann in Frage, wenn - wie vorstehend bereits erwähnt - der Zwischenraum zwischen den beiden Spindellagern 25, 27 z.B. für die Schmiermittelzufuhr benötigt wird.

Wie die Fig. 3c und 3d zeigen, können erfindungsgemäß auch mehrere Sensoranordnungen 11, 13 zum Einsatz kommen, mit denen jeweils eines der vorhandenen Spindellager 25, 27 überwacht wird.

### Bezugszeichenliste

- 11: innerer Sensorring
- 13: äußerer Sensorring
- 15: Spindelwelle
- 17: innerer Sensor
- 19: äußerer Sensor
- 21: innere Spule
- 23: äußere Spule
- 25: Lagerinnenteil
- 27: Lageraußenteil
- 29: axiale Außenfläche
- 31: Seitenwand
- 33: Platine
- 35: Spindel
- 37: Öffnung
- 41: Ringelement, Trägerring
- 43: Ringelement
- 45: Ringelement, Deckel
- 47: Ringelement, Trägerring
- 49: Ringelement, Deckel
- 51: Stecker
- 53: Datenlogger
- 55: Signalleitung

## Patentansprüche

1. Sensoranordnung zur Lagerzustandsüberwachung an Spindeln, insbesondere an schnell drehenden Hochpräzisionsspindeln mit vorgespannten Lagern,
mit zwei konzentrisch angeordneten Sensorringen (11, 13), wobei im Betrieb der innere Sensorring (11) zusammen mit der Spindelwelle (15) relativ zu dem ihn umgebenden äußeren Sensorring (13) rotiert, und wobei in jeden Sensorring (11, 13) wenigstens ein Sensor (17, 19) für einen zu überwachenden Lagerparameter sowie eine Übertragungseinrichtung (21, 23) eines Übertragungssystems integriert sind, das zur berührungslosen Energie- und Signalübertragung zwischen den beiden Sensorringen (11, 13) dient.

2. Sensoranordnung nach Anspruch 1,
**dadurch gekennzeichnet,**
**dass** in jeden Sensorring (11, 13) wenigstens ein Temperatursensor (17, 19) zur Messung der Temperatur eines im Betrieb in unmittelbarer Nähe befindlichen Lagerbestandteils (25, 27) integriert ist.

3. Sensoranordnung nach Anspruch 2,
**dadurch gekennzeichnet,**
**dass** die Temperatursensoren (17, 19) jeweils in thermischem und/oder mechanischem Kontakt mit einer eine axiale Außenfläche (29) aufweisenden Seitenwand (31) des Sensorringes (11, 13) stehen.

4. Sensoranordnung nach einem der vorhergehenden Ansprüche,
**dadurch gekennzeichnet,**
**dass** in jeden Sensorring (11, 13) ein Schwingungssensor integriert ist.

5. Sensoranordnung nach einem der vorhergehenden Ansprüche,
**dadurch gekennzeichnet,**
**dass** ein Sensorring (13) mit einer ansteuerbaren Schwingungsquelle versehen ist.

6. Sensoranordnung nach einem der vorhergehenden Ansprüche,
**dadurch gekennzeichnet,**
**dass** die Sensoren (17, 19) jeweils bezüglich der Axialrichtung außermittig in den Sensorringen (11, 13) angeordnet sind.

7. Sensoranordnung nach einem der vorhergehenden Ansprüche,
**dadurch gekennzeichnet,**
**dass** in jedem Sensorring (11, 13) der Sensor (17, 19) und die zum Betreiben des Sensors (17, 19) und/ oder zumindest eines Teils des Übertragssystems erforderliche Elektronik auf einer in den Sensorring integrierten Platine (33) zusammengefasst sind.

8. Sensoranordnung nach einem der vorhergehenden Ansprüche,
**dadurch gekennzeichnet,**
**dass** in jedem Sensorring (11, 13) die Übertragungseinrichtung eine Spule (21, 23) umfasst, die in Form von Leiterbahnen auf einem Träger (33) vorgesehen ist.

9. Sensoranordnung nach einem der vorhergehenden Ansprüche,
**dadurch gekennzeichnet ,**
**dass** in jedem Sensorring (11, 13) der Sensor (17, 19), die zum Betreiben des Sensors (17, 19) und/oder zumindest eines Teils des Übertragssystems erforderliche Elektronik sowie eine in Form von insbesondere gedruckten Leiterbahnen vorgesehene Spule (21, 23) auf einem gemeinsamen, in den Sensorring (11, 13) integrierten Träger (33) zusammengefasst sind.

10. Spindel, insbesondere schnell drehende Hochpräzisionsspindel mit vorgespannten Lagern,
mit wenigstens einer Sensoranordnung (11, 13) nach einem der vorhergehenden Ansprüche.

11. Spindel nach Anspruch 10,
**dadurch gekennzeichnet,**
**dass** die Sensoranordnung (11, 13) und das jeweils zu überwachende Spindellager (25, 27) nebeneinander auf der Spindelwelle (15) angeordnet sind.

12. Spindel nach Anspruch 10 oder 11,
**dadurch gekennzeichnet ,**
**dass** der innere Sensorring (11) einem zusammen mit der Spindelwelle (15) rotierenden Lagerinnenteil (25) und der äußere Sensorring (13) einem stationären Lageraußenteil (27) des jeweils zu überwachenden Spindellagers zugeordnet ist.

13. Spindel nach einem der Ansprüche 10 bis 12,
**dadurch gekennzeichnet ,**
**dass** die Sensoranordnung (11, 13) axial in thermischem und/oder mechanischem Kontakt mit dem jeweils zu überwachenden Spindellager (25, 27) angeordnet ist.

14. Spindel nach einem der Ansprüche 10 bis 13,
**dadurch gekennzeichnet ,**
**dass** die Sensoranordnung (11, 13) und das jeweils zu überwachende Spindellager (25, 27) den gleichen Außendurchmesser aufweisen.

15. Spindel nach einem der Ansprüche 10 bis 14,
**dadurch gekennzeichnet ,**
**dass** die Sensorringe (11, 13) jeweils den gleichen Innendurchmesser und/oder Außendurchmesser wie ein jeweils zu überwachender ringförmiger Bestandteil (25, 27) des Spindellagers aufweisen.

16. Spindel nach einem der Ansprüche 10 bis 15,
**dadurch gekennzeichnet ,**
**dass** die Spindel (35) mehrere axial beabstandete Spindellager (25, 27) umfasst, wobei zwischen zwei benachbarten Spindellagern (25, 27) eine Sensoranordnung (11, 13) positioniert ist.

17. Spindel nach einem der Ansprüche 10 bis 16,
**dadurch gekennzeichnet ,**
**dass** die Sensoranordnung (11, 13) zwischen dem jeweils zu überwachenden Spindellager (25, 27) und einem axialen Anschlag für das Spindellager (25, 27) positioniert ist.

18. Spindel nach einem der Ansprüche 10 bis 17,
**dadurch gekennzeichnet ,**
**dass** es sich bei den Spindellagern (25, 27) um vorgespannte Lager handelt und die Sensoranordnung (11, 13) zwischen den Spindellagern wirkende Vorspannkräfte überträgt.

19. Spindel nach einem der Ansprüche 10 bis 18,
**dadurch gekennzeichnet ,**
**dass** die Spindel (35) mehrere axial beabstandete Spindellager (25, 27) umfasst, wobei jedem Spindellager (25, 27) eine Sensoranordnung (11, 13) zugeordnet ist.

20. Verfahren zur Lagerzustandsüberwachung an Spindeln, insbesondere an schnell drehenden Hochpräzisionsspindeln mit vorgespannten Lagern,
bei dem mit wenigstens einer Sensoranordnung (11, 13) nach einem der Ansprüche 1 bis 9 zumindest ein Spindellager (25, 27) überwacht wird, indem mit dem inneren Sensorring (11) ein zusammen mit der Spindelwelle (15) rotierendes Lagerinnenteil (25) und mit dem äußeren Sensorring (13) ein stationäres Lageraußenteil (27) des Spindellager überwacht wird.

## Claims

1. A sensor arrangement for the monitoring of the bearing condition at spindles, in particular at fast-rotating high-precision spindles with pre-loaded bearings,
having two concentrically arranged sensor rings (11, 13), wherein the inner sensor ring (11) rotates together with the spindle shaft (15) relative to the outer sensor ring (13) surrounding it in operation, and wherein at least one sensor (17, 19) for a bearing parameter to be monitored as well as a transmission device (21, 33) of a transmission system are integrated into each sensor ring (11, 13), said transmission system serving for the contactless transmission of energy and signals between the two sensor rings (11, 13).

2. A sensor arrangement in accordance with claim 1, **characterised in that** at least one temperature sensor (17, 19) for the measurement of the temperature of a bearing element (25, 27) located in direct proximity in operation is integrated into each sensor ring (11, 13).

3. A sensor arrangement in accordance with claim 2, **characterised in that** the temperature sensors (17, 19) are each in thermal and/or mechanical contact with a side wall (31) of the sensor ring (11, 13) having an axial outer surface (29).

4. A sensor arrangement in accordance with any one of the preceding claims, **characterised in that** a vibration sensor is integrated into each sensor ring (11, 13).

5. A sensor arrangement in accordance with any one of the preceding claims, **characterised in that** a sensor ring (13) is provided with a controllable vibration source.

6. A sensor arrangement in accordance with any one of the preceding claims, **characterised in that** the sensors (17, 19) are each arranged off-centre in the sensor rings (11, 13) with respect to the axial direction.

7. A sensor arrangement in accordance with any one of the preceding claims, **characterised in that** the sensor (17, 19) and the electronics required for the operation of the sensor (17, 19) and/or of at least a part of the transmission system are combined on a circuit board (33) integrated into the sensor ring in each sensor ring (11, 13).

8. A sensor arrangement in accordance with any one of the preceding claims, **characterised in that** the transmission device in each sensor ring (11, 13) includes a coil (21, 23) which is provided in the form of conductor tracks on a carrier (33).

9. A sensor arrangement in accordance with any one of the preceding claims, **characterised in that** the sensor (17, 19), the electronics required for the operation of the sensor (17, 19) and/or of at least a part of the transmission system as well as a coil (21, 23) provided in the form of conductor tracks, in particular printed circuit tracks, are combined on a common carrier (33) integrated into the sensor ring (11, 13) in each sensor ring (11, 13).

10. A spindle, in particular a fast-rotating high-precision spindle with pre-loaded bearings, having at least one sensor arrangement (11, 13) in accordance with any one of the preceding claims.

11. A spindle in accordance with claim 10, **characterised in that** the sensor arrangement (11, 13) and the respective spindle bearing (25, 27) to be monitored are arranged next to one another on the spindle shaft (15).

12. A spindle in accordance with claim 10 or claim 11, **characterised in that** the inner sensor ring (11) is associated with an inner bearing part (25) rotating together with the spindle shaft (15) and the outer sensor ring (13) is associated with a stationary outer bearing part (27) of the respective spindle shaft to be monitored.

13. A spindle in accordance with any one of the claims 10 to 12, **characterised in that** the sensor arrangement (11, 13) is arranged axially in thermal and/or mechanical contact with the respective spindle bearing (25, 27) to be monitored.

14. A spindle in accordance with any one of the claims 10 to 13, **characterised in that** the sensor arrangement (11, 13) and the respective spindle bearing (25, 27) to be monitored have the same outer diameter.

15. A spindle in accordance with any one of the claims 10 to 14, **characterised in that** the sensor rings (11, 13) each have the same inner diameter and/or outer diameter as a respective ring-shaped element (25, 27) of the spindle bearing to be monitored.

16. A spindle in accordance with any one of the claims 10 to 15, **characterised in that** the spindle (35) includes a plurality of axially spaced apart spindle bearings (25, 27), with a sensor arrangement (11, 13) being positioned between two adjacent spindle bearings (25, 27).

17. A spindle in accordance with any one of the claims 10 to 16, **characterised in that** the sensor arrangement (11, 13) is positioned between the respective spindle bearing (25, 27) to be monitored and an axial abutment for the spindle bearing (25, 27).

18. A spindle in accordance with any one of the claims 10 to 17, **characterised in that** the spindle bearings (25, 27) are pre-loaded bearings and the sensor arrangement (11, 15) transmits bias forces acting between the spindle bearings.

19. A spindle in accordance with any one of the claims 10 to 18, **characterised in that** the spindle (35) includes a plurality of axially spaced apart spindle bearings (25, 27), with a sensor arrangement (11, 13) being associated with each spindle bearing (25, 27).

20. A method for the monitoring of the bearing condition at spindles, in particular at fast-rotating high-precision spindles with pre-loaded bearings,
wherein at least one spindle bearing (25, 27) is monitored using a sensor arrangement (11, 13) in accordance with any one of the claims 1 to 9 in that an inner bearing part (25) rotating together with the spindle shaft (15) is monitored with the inner sensor ring (11) and a stationary outer bearing part (27) of the spindle bearing is monitored with the outer sensor ring (13).

## Revendications

1. Agencement de capteur pour la surveillance de l'état des paliers sur des broches, en particulier sur des broches à haute précision en rotation rapide avec des paliers précontraints,
comprenant deux bagues de capteurs (11, 13) agencées concentriquement, telles qu'en fonctionnement la bague de capteur intérieure (11) est en rotation conjointement avec l'arbre de broche (15) par rapport à la bague de capteur extérieure (13) qui l'entoure, et
dans lequel dans chaque bague de capteur (11, 13) est intégré au moins un capteur (17, 19) pour un paramètre de palier à surveiller ainsi qu'un moyen de transmission (21, 23) d'un système de transmission qui sert à la transmission d'énergie et de signaux sans contact entre les deux bagues de capteurs (11, 13).

2. Agencement de capteur selon la revendication 1,
**caractérisé en ce que**, dans chaque bague de capteur (11, 13) est intégré au moins un capteur de température (17, 19) pour la mesure de la température d'un composant de palier (25, 27) qui se trouve immédiatement au voisinage en fonctionnement.

3. Agencement de capteur selon la revendication 2,
**caractérisé en ce que** les capteurs de température (17, 19) sont respectivement en contact thermique et/ou mécanique avec une paroi latérale (31), laquelle comporte une surface extérieure axiale (29), de la bague de capteur (11, 13).

4. Agencement de capteur selon l'une des revendications précédentes,
**caractérisé en ce qu'**un capteur d'oscillation est intégré dans chaque bague de capteur (11, 13).

5. Agencement de capteur selon l'une des revendications précédentes,
**caractérisé en ce qu'**une bague de capteur (13) est pourvue d'une source d'oscillation pilotable.

6. Agencement de capteur selon l'une des revendications précédentes,
**caractérisé en ce que** les capteurs (17, 19) sont agencés respectivement de manière décentrée, par rapport à la direction axiale, dans les bagues de capteurs (11, 13).

7. Agencement de capteur selon l'une des revendications précédentes,
**caractérisé en ce que**, dans chaque bague de capteur (11, 13), le capteur (17, 19) et l'unité électronique nécessaire pour le fonctionnement du capteur (17, 19) et/ou au moins une partie du système de transmission sont regroupés sur une platine (33) intégrée dans la bague de capteur.

8. Agencement de capteur selon l'une des revendications précédentes,
**caractérisé en ce que** dans chaque bague de capteur (11, 13) le moyen de transmission comprend une bobine (21, 23) qui est prévue sous la forme de pistes conductrices sur un support (33).

9. Agencement de capteur selon l'une des revendications précédentes,
**caractérisé en ce que** dans chaque bague de capteur (11, 13), le capteur (17, 19), l'unité électronique nécessaire pour le fonctionnement du capteur (17, 19) et/ou au moins une partie du système de transmission, de même qu'une bobine (21, 23) prévue sous la forme de pistes conductrices, en particulier imprimées, sont regroupés sur un support (33) commun intégré dans la bague de capteur (11, 13).

10. Broche, en particulier broche à haute précision en rotation rapide comprenant des paliers précontraints,
avec au moins un agencement de capteur (11, 13) selon l'une des revendications précédentes.

11. Broche selon la revendication 10,
**caractérisée en ce que** l'agencement de capteur (11, 13) et le palier de broche (25, 27) respectivement à surveiller sont agencés l'un à côté de l'autre sur l'arbre de broche (15).

12. Broche selon la revendication 10 ou 11,
**caractérisée en ce que** la bague de capteur intérieure (11) est associée à une partie intérieure de palier (25) qui tourne conjointement avec l'arbre de broche (15), et la bague de capteur extérieure (13) est associée à une partie extérieure de palier stationnaire (27) du palier de broche respectivement à surveiller.

13. Broche selon l'une des revendications 10 à 12,
**caractérisée en ce que** l'agencement de capteur (11, 13) est agencé axialement en contact thermique et/ou mécanique avec le palier de broche (25, 27) respectivement à surveiller.

14. Broche selon l'une des revendications 10 à 13,
**caractérisée en ce que** l'agencement de capteur (11, 13), et le palier de broche (25, 27) qu'il s'agit de surveiller présentent le même diamètre extérieur.

15. Broche selon l'une des revendications 10 à 14,
**caractérisée en ce que** la bague de capteur (11, 13) présente respectivement le même diamètre intérieur et/ou diamètre extérieur qu'un composant (25, 27) de forme annulaire, du palier de broche, qu'il s'agit de surveiller.

16. Broche selon l'une des revendications 10 à 15,
**caractérisée en ce que** la broche (35) comprend plusieurs paliers de broches (25, 27) écartés axialement, dans laquelle un agencement de capteur (11, 13) est agencé entre deux paliers de broches voisins (25, 27).

17. Broche selon l'une des revendications 10 à 16,
**caractérisée en ce que** l'agencement de capteur (11, 13) est positionné entre le palier de broche (25, 27) respectivement à surveiller, et une butée axiale pour le palier de broche (25, 27).

18. Broche selon l'une des revendications 10 à 17,
**caractérisée en ce que** les paliers de broches (25, 27) sont des paliers précontraints, et l'agencement de capteur (11, 13) transmet des forces de précontrainte agissant entre les paliers de broches.

19. Broche selon l'une des revendications 10 à 18,
**caractérisée en ce que** la broche (35) comprend plusieurs paliers de broche (25, 27) écartés axialement, et dans laquelle un agencement de capteur (11, 13) est associé à chaque palier de broche (25, 27).

20. Procédé pour la surveillance de l'état des paliers sur des broches, en particulier des broches à haute précision en rotation rapide comprenant des paliers précontraints,
dans lequel, avec au moins un agencement de capteur (11, 13) selon les revendications 1 à 9, on surveille au moins un palier de broche (25, 27), en surveillant avec la bague de capteur intérieure (11) une partie intérieure de palier (25) en rotation conjointement avec l'arbre de broche (15), et en surveillant avec la bague de capteur extérieure (13) une partie extérieure de palier stationnaire (27) du palier de broche.
